Europäisches Patentamt

European Patent Office

Office européen des brevets

(19)

(11) Veröffentlichungsnummer: **0 047 481**
**B1**

(12) **EUROPÄISCHE PATENTSCHRIFT**

(45) Veröffentlichungstag der Patentschrift:
**16.01.85**

(51) Int. Cl.⁴: **B 27 D 1/00**

(21) Anmeldenummer: **81106850.1**

(22) Anmeldetag: **02.09.81**

(54) **Verfahren zum Herstellen von Holzfurnieren.**

(30) Priorität: **08.09.80 LU 82754**

(43) Veröffentlichungstag der Anmeldung:
**17.03.82 Patentblatt 82/11**

(45) Bekanntmachung des Hinweises auf die Patenterteilung:
**16.01.85 Patentblatt 85/3**

(84) Benannte Vertragsstaaten:
**AT BE CH DE FR IT LI**

(56) Entgegenhaltungen:
**CH - A - 218 151**
**CH - A - 292 492**
**DE - A - 1 628 953**
**DE - B - 1 179 353**
**DE - B - 1 291 464**
**DE - C - 807 090**
**FR - A - 896 685**
**FR - A - 1 493 670**
**GB - A - 1 075 893**
**GB - A - 1 161 721**

**TASCHENBUCH DER HOLZTECHNOLOGIE, 1966, VEB
FACHBUCHVERLAG, Leipzig (DD);**

(73) Patentinhaber: **André, Marc-Anton, Am Schlössel 16,
D-6932 Hirschhorn (DE)**
Patentinhaber: **André, Volkmar Reinhard, Langenthaler
Strasse 4, D-6932 Hirschhorn (DE)**

(72) Erfinder: **Die Erfinder haben auf ihre Nennung verzichtet**

(74) Vertreter: **Hach, Hans Karl, Dr., Tarunstrasse 23,
D-6950 Mosbach-Waldstadt (DE)**

## Beschreibung

Die Erfindung betrifft ein Verfahren zum Herstellen von Holzfurnieren, bei dem ein Rundholz entrindet, zugerichtet, durchfeuchtet und gekocht wird und dann noch warm und durchfeuchtet mit einer Schichtstärke von Bruchteilen eines Millimeters entlang zueinander planparallel sich in Faserlängsrichtung erstreckender Schnittflächen, zu sich jeweils über die ganze Schnittfläche erstreckenden Furnierrohlingen abgemessert werden, die anschliessend getrocknet, gesäumt und mit einer Tragschicht, welche verhindert, dass beim Trocknen Risse im Furnier entstehen, versehen werden und entsprechend ihrer ursprünglichen gegenseitigen Lage abgestapelt werden.

Zur Herstellung von Furnieren sind folgende Schritte üblich:

1. Wässern des Holzstammes, bis er ganz durchtränkt ist
2. Zurichten des Stammes und Einspannen in die Hobelmaschine
3. Hobeln beziehungsweise Messern der Furniere
4. Ablegen der feuchten Furnierblätter auf Stapel
5. Trocknen der einzelnen Blätter bei Temperaturen nahe 100°C (Grad Celsius) unter Belastung
6. Ablegen der trocknen Blätter auf Stapel
7. Randbeschneiden einzelner Furnier-Bündel und Zusammenbinden der Bündel
8. Stapeln der Bündel übereinander zum Versand.

Nach dem Messern haben die Furnierrohlinge einen Feuchtigkeitsgehalt von ca. 70%, bezogen auf trockenes Holz. Diese Feuchtigkeit verleiht dem Furnier Elastizität und Festigkeit. Nach dem Trocknen geht die Festigkeit und die Elastizität erheblich zurück. Vor allem Hölzer mit ausgeprägten Jahresringen, wie zum Beispiel Eiche, neigen zum Bruch entlang den dünnen Zonen der Jahresringe. Dieser Abfall der Festigkeit beim Trocknen ist messbar: Die Zugfestigkeit quer zu den Jahresringen zum Beispiel von Eichen-Furnierrohlingen mit 8% Feuchte liegt bei ca. 65% der Festigkeitswerte der entsprechenden nassen Furnierrohlinge. Zugfestigkeit und Festigkeitsverminderung nach dem Trocknen schwanken stark, je nach der Struktur des Holzes.

So wie gewöhnliches Holz schrumpfen beim Trocknen auch Furniere in Querrichtung zur Faser um ca. 7%. In Längsrichtung tritt dagegen praktisch keine Änderung ein. Um zu vermeiden, dass die Furnierrohlinge sich beim Trocknen wölben, werden sie deshalb während des Trocknens durch aufgelegte Drahtgitter eben gehalten. Dieses Verfahren ist jedoch nur auf Furnierrohlinge üblicher Stärke anwendbar.

Bei der Herstellung von Holzfurnieren strebt man im Interesse einer möglichst weitgehenden Ausnutzung des Rundholzes möglichst geringe Schichtstärken an. Unterschreitet man bei grob strukturierten Hölzern, wie zum beispiel Eiche, eine Schichtstärke von etwa 0,5 mm (Millimeter) und bei fein strukturierten Hölzern eine Schichtstärke von etwa 0,3 mm, dann werden einzelne Teile des Rohfurniers, vorwiegend im Bereich der angeschnittenen Winterjahresringe, zu schwach, um den nötigen Halt zu bieten, und es besteht die Gefahr, dass das Rohfurnier entlang dieser Schwachstellen seinen Halt verliert und auseinanderreisst. Man kann das Auseinanderreissen verhindern, indem man, wie beispielsweise aus der DE-B 1 179 353 bekannt, auf die Rohfurniere eine biegsame Folie, zum Beispiel aus Kunststoff, aufklebt, aber das ist aufwending und umständlich. Da die Furnierrohlinge, bedingt durch die unterschiedlichen Abmessungen der Rundhölzer, in unterschiedlichen Abmessungen anfallen, muss man sehr viel Folienabfall beim Aufkleben einer Trägerfolie in Kauf nehmen. Das Aufkleben einer solchen Trägerfolie ist ein zusätzlicher, aufwendiger Arbeitsgang, der noch erschwert wird durch die Tatsache, dass man den leicht reissenden Furnierrohling faltenfrei und unbeschädigt mit der Folie zusammenbringen muss.

Zum Verleimen von mehreren Furnierstücken miteinander ist es aus der CH-A 218 191 vorbekannt, ein einzelnes Furnierstück mit einer Leimschicht zu überziehen.

Aufgabe der Erfindung ist es, auf einfache Weise dünnen Holzfurnieren durch Auftragen einer Tragschicht den nötigen Halt zu vermitteln.

Die Erfindung ist dadurch gekennzeichnet, dass auf die noch nicht fertiggetrockneten, also noch feuchten Furnierrohlinge ein Film aus aushärtbarem, fliess- oder streichfähigen Trägermaterial aufgetragen wird, der zu der am Furnier festhaftenden Tragschicht ausgehärtet wird. Vorzugsweise erfolgt die Aushärtung des Trägermaterials beim Trocknen der Furnierrohlinge.

In fliess- oder streichfähiger Konsistenz lässt sich Trägermaterial schonend, gleichmässig und auch ohne grossen Aufwand durch Aufsprühen, Tränken, Streichen, Spritzen, Aufnebeln und dergleichen auftragen. Das lässt sich maschinell oder auch von Hand sehr viel schneller und einfacher durchführen als eine folienförmige Trägerschicht aufzukleben. Nach der Erfindung kann man auch leicht vermeiden, dass beim Auftragen Kräfte auf die Furnierrohlinge ausgeübt werden, die an Schwachstellen zu Rissen führen könnten. Der Auftrag und damit die angestrebte Verfestigung erfolgt zweckmässig so früh wie möglich, um jede unnötige Handhabung des noch ungeschützten Furnierrohlings zu vermeiden. Man kann den Film einseitig auf die Furnierrohlinge auftragen.

Aufgabe einer Weiterbildung der Erfindung ist es, auf einfache Weise dünnen Holzfurnieren durch einseitiges Aufbringen einer Tragschicht den nötigen Halt zu vermitteln, so dass sie ohne erhöhtes Bruchrisiko wie Furnierrohlinge üblicher Dicke gehandhabt und verarbeitet werden können. Die zur Verstärkung notwendigen Massnahmen sollen in den eingangs geschilderten Arbeitsablauf eingegliedert werden können. Insbesondere soll vermieden werden, dass zusätzlicher Randverschnitt und Abfall auftritt.

Diese Weiterbildung ist dadurch gekennzeichnet, dass man dünne Furnierrohlinge frisch, das heisst unmittelbar nach dem Messern in noch feuchtem Zustand oder ausnahmsweise auch nach dem wiederanfeuchten angetrockneter Furnierrohlinge mit einer Polymerisatdispersion einseitig besprüht, mit einem Überschuss von trokkenem, vorzugsweise aus Holz oder holzähnlichen Stoffen gewonnenem pulverförmigen Material überzieht, in an sich bekannter Weise, vorzugsweise unter Belastung trocknet und vom Überschuss des pulverförmigen Materials befreit. Es versteht sich, dass die so erzielte Beschichtung vorzugsweise auf der weniger guten Seite des Furnierrohlings aufgebracht wird oder jedenfalls auf der Seite, die mit dem späteren Holzgrundwerkstoff verklebt werden soll.

Unmittelbar nach dem Messern bilden die Furnierrohlinge ebene Flächen, so dass die aufgesprühte Polymerdispersion eine gleichmässig dicke Schicht auf dem Furnier bildet. Unter «unmittelbar nach dem Messern» ist also zu verstehen, dass die gemesserten Furnierrohlinge im wesentlichen noch keine Wölbungen aufweisen, wie sie schon nach dem Antrocknen unvermeidlich sind. Gegebenenfalls ist bei angetrockneten Furnieren durch Wiederanfeuchten eine Glättung zu erzielen.

Der Film sollte dann im fertigen Furnier, das aus mehreren, abgesäumten Furnierrohlingen zusammengesetzt ist, entweder durchgehend auf der Unterseite oder durchgehend auf der Oberseite liegen. Trägt man den Film immer auf die gleiche Seite der Furnierrohlinge, also zum Beispiel auf die beim Abmessern oben gelegene Seite auf, dann eignen sich solche Furnierrohlinge für die geschobene Verlegung. Ist gestürzte Verlegung vorgesehen, dann empfiehlt es sich bei einseitiger Beschichtung den Film alternierend, entsprechend der gestürzten Verlegung beim ersten Furnierrohling auf die Oberseite, beim nächsten auf die Unterseite und beim nächsten wieder auf die Oberseite und so fort, aufzutragen.

Diese Probleme stellen sich nicht, wenn man den Film beidseitig auf die Furnierrohlinge aufträgt, so dass beidseitig gleich Tragschichten entstehen. Dann ergibt sich bei gestürzter und geschobener Verlegung die gleiche Oberfläche, gebildet aus den Tragschichten. Solche beidseitige Beschichtung kann man auch durch Tränken der Furnierrohlinge im fliessfähigen Trägermaterial auftragen.

Das Trägermaterial für Tragschichten, die im fertigen Furnier auf der Oberseite liegen, ist zweckmässig durchsichtig oder durchscheinend, um den angestrebten Holzcharakter nicht zu verdecken. Es empfiehlt sich dafür auch die Verwendung eines Trägermaterials, das als Haftvermittler für eine oberflächliche Lackbeschichtung geeignet ist. Für Tragschichten, die im fertig verlegten Furnier auf der Rückseite liegen, empfiehlt sich ein Trägermaterial, das ausgehärtet als Haftvermittler für eine Klebbeschichtung geeignet ist.

Es sind Kunststoffe bekannt, die diese Eigenschaften in sich vereinigen und als Trägermaterial sowohl für die Vorderseite als auch für die Rückseite des fertig verlegten Furniers geeignet sind. Solche Kunststoffe werden als Trägermaterial bevorzugt.

Man kann vorteilhaft Trägermaterialien verwenden, die fliess- oder streichfähig aus einer Komponente bestehen und allein durch Trocknen aushärten. Für manche Anwendungsfälle wird jedoch bevorzugt ein aus mindestens zwei Komponenten bestehendes Trägermaterial verwendet, das erst durch Zufügen der letzten Komponente zum Aushärten aktiviert wird und das mit Ausnahme der letzten Komponente zunächst aufgetragen wird, worauf dann die letzte Komponente aufgesprüht oder aufgedampft wird. Ein Schichtauftrag aus Zweikomponentenmaterial, der erst bei Auftrag der zweiten Komponente aushärtet, ist aus GB-A 1 075 893 bekannt.

Ein solches Trägermaterial kann unter Umständen sehr viel schneller zum Aushärten gebracht werden als ein allein durch Trocknen aushärtendes, so dass man sehr viel schneller die angestrebte Verfestigung des dünnen Furnierrohlings erzielt. Besonders wenn man damit rechnen muss, dass beim Austrocknen der überschüssigen Feuchtigkeit des abgemessenen Furnierrohlings Spannungen auftreten, die an den Schwachstellen zu Rissen führen können, erweist es sich als vorteilhaft, die Verfestigung der Tragschicht herbeizuführen, ehe solche Trocknungsspannungen auftreten können.

Unter Polymerdispersionen sind wässrige Dispersionen von Polymerisaten aus äthylenisch ungesättigten Verbindungen, wie Vinylacetat, Estern der Acrylsäure, Styrol oder deren Mischungen zu verstehen. Die Dispersionen können vernetzbar oder selbstvernetzend sein. Die niedrigste Filmbildetemperatur sollte unter 25°C liegen. Die Dispersionen werden im allgemeinen in Form einer sogenannten Flotte verwendet, die auch etwas verdünnt sein kann: Die Sprühflotten haben zum Beispiel einen Feststoffgehalt von 20 bis 60%, vorzugsweise von 40 bis 55%. Es empfiehlt sich, einen möglichst hohen Feststoffgehalt zu wählen, weil dies die Kosten der Trocknung günstig beeinflusst.

Die Dispersionen sollen ausserdem eine hohe Viskosität aufweisen, zum Beispiel 300 mPa.s oder mehr; dies hat den Sinn, das eventuelle Durchschlagen von Flottenbestandteilen auf die Gutseite des Furnierrohlings zu verhindern. Sehr dünne Furniere mancher Holzarten (zum Beispiel Eiche) haben nämlich durchgehende Poren, besonders an den Stellen der Jahresringe, die dem Frühjahrsholz zugerechnet werden.

Ausserdem verhindert eine hohe Viskosität, dass die Flotte an tieferen Stellen des Furnierblattes zusammenläuft und so einen ungleichmässigen Auftrag hervorruft.

Anstelle einer hohen Viskosität oder zusätzlich ist eine hohe Oberflächenspannung, zum Beispiel 40 dyn/cm (= 40·10⁻⁵ N/cm) nützlich.

Die Viskosität und/oder Oberflächenspannung kann durch Zusätze beeinflusst werden, was an sich bekannt ist. Besonders günstig sind Zusätze, die eine Strukturviskosität (Thixotropie) hervorrufen.

Bei manchen, insbesondere säurehaltigen Holzarten (zum Beispiel wiederum Eiche) ist der pH-Wert der Dispersion zu beachten, um Verfärbungen auszuschliessen; er sollte ebenfalls im sauren Bereich, zum Beispiel zwischen 3 und 6 liegen, wenn dies vermieden werden soll. Verdickungsmittel (zur Viskositätseinstellung) die im sauren pH-Bereich verwendet werden können, sind zum Beispiel Cellulose-Derivate.

Für das Besprühen bei hoher Viskosität wird vorzugsweise das sogenannte Airless-Verfahren angewendet, das Sprühdrücke von 80 oder mehr bar erlaubt. Bei den nachfolgenden Beispielen wurde eine Anlage verwendet, die Drücke von 90 bis 140 bar erreicht.

Die aufgetragene Menge liegt im allgemeinen zwischen 5 und 300 g/m², bezogen auf den Feststoffgehalt, vorzugsweise bei 10 bis 200 g/m².

Das Bepudern der nassen Dispersionsoberfläche mit einem Überschuss von trockenem pulverförmigen Material kann in einer üblichen Pulverstreuanlage erfolgen. Dieser Schritt ist notwendig, um den vorbehandelten Furnierrohling durch den Trockner laufen lassen zu können: Im Trockner werden die Furnierrohlinge mit Drahtgittern belastet, um ein Wölben und Verwerfen der Furnierrohlinge während des Trocknens zu verhindern. Ohne die Abdeckung der Dispersionsoberfläche mit einem Überschuss von pulverförmigem Material würden die Furniere an den Drahtgittern festkleben. Unter Überschuss an pulverförmigem Material ist also eine solche Menge zu verstehen, dass die pulverförmige Oberfläche während des ganzen Trocknungsvorgangs erhalten bleibt, auch wenn die Dispersion einen Teil des Pulvers benetzt und in sich aufnimmt.

Als pulverförmige Materialien kommen Substanzen mit Korngrössen unter 0,1 mm in Frage, insbesondere Holzmehl, aber auch anorganische Füllstoffe, wie Kreide, Talkum und Gesteinsmehl.

Es können aber auch organische pulverförmige Substanzen verwendet werden, deren Erweichungspunkte so hoch liegen, dass sie bei den im Trockner herrschenden Temperaturen weder schmelzen noch klebrig werden.

Von besonderem Interesse sind dabei Pulver von Schmelzklebern aus zum Beispiel Polyamiden, deren schmelzbereich so gewählt ist, dass er über der Trocknertemperatur liegt, aber unter den Temperaturen, die später beim Verleimen angewendet werden, schmilzt. Auf diese Weise erübrigt sich ein Leimauftrag beim späteren Verkleben der Furniere.

Der Überschuss an pulverförmigem Material wird nach dem Durchlauf durch den Trockner zweckmässig durch Absaugen entfernt, gegebenenfalls gesiebt und zur Pulverstreuanlage zurückgeführt. Die so behandelten Furniere können dann wie im normalen Arbeitsprozess kantenbeschnitten, gebündelt und übereinander gestapelt werden.

Ein besonderer Vorteil ist, dass sowohl die Dispersionsschicht als auch das aufgestreute Pulver die einseitige Schrumpfung des nassen Furniers im Trockner mitmachen, ohne zu Falten, Rissen oder Spannungen zu führen. Die Verstärkung des Furnierrohlings erfolgt während des Trocknungsvorganges, das heisst, dass der dünne Furnierrohling nie eine empfindliche Phase durchläuft. Vor dem Trocknen ist es nass und geschmeidig, nach dem Trocknen bereits verstärkt. Es treten auch keinerlei Abfälle auf. Der Pulverüberschuss auf dem Furnier wird abgesaugt und wieder in die Pulverstreuanlage zurückgeführt. Der Sprühstrahl der Dispersion muss zwar etwas breiter gehalten sein als die darunter durchlaufenden, ungleichmässig breiten Furnierstücke. Durch entsprechende Ausgestaltung der Spritzkabine kann aber auch der am Furnierstück vorbeigehende Teil des Sprühstrahls wieder aufgefangen und zurückgeführt werden.

Eine Weiterbildung des erfinderischen Verfahrens, bei der das Rohfurnier bereits mit dem Trägermaterial beschichtet anfällt, ist dadurch gekennzeichnet, dass der Film jeweils auf diejenige freie Oberfläche des Rundholzes aufgetragen wird, die mit dem nächsten Furneirrohling abgemessert wird. Es wird nach dieser Weiterbildung also zunächst das Trägermaterial aufgetragen und dann erst der Furnierrohling abgemessert. Man braucht also bei diesem Verfahren an abgemesserten dünnen Furnierrohling keinerlei Manipulationen mehr für das Auftragen der Tragschicht vorzunehmen, man braucht nur noch den Aushärtvorgang auszulösen oder abzuwarten. Wenn man sehr schnell aushärtbares Trägermaterial, zum Beispiel aus mehreren Komponenten bestehendes, verwendet, kann man den Aushärtvorgang so beschleunigen, dass das Rohfurnier beim Messern oder unmittelbar danach bereits durch die ausgehärtete Tragschicht hinreichend verfestigt ist.

Bei diesem Verfahren, bei dem der Film jeweils auf die freie Oberfläche des Rundholzes aufgetragen wird, kann man vorteilhaft auch ein streichfähiges Trägermaterial einsetzen, das man durch einen der Messerschneide beim Messern vorauseilenden, auf der freien Oberfläche unter Anpressdruck gleitenden Messerbalken über diese Oberfläche streicht. Der bei diesem Verfahren eingesetzte Messerbalken ist bei Furnierschneidern üblich, bedingt also bei diesem Verfahren keinen zusätzlichen, vorrichtungsmässigen Aufwand.

Als Trägermaterialien kommen vorzugsweise Kunststoffe in Frage, wie sie als Klebstoffe, Lacke oder Vergussmassen bekannt sind. Dabei werden solche Trägermaterialien bevorzugt, die eine gute Haftverbindung mit dem Holz eingehen, möglichst nicht durch den dünnen Furnierrohling von einer Seite auf die andere durchschlagen und zu einer Tragschicht aushärtbar sind, die hinsichtlich ihrer physikalischen Eigenschaften, nämlich Elastizität, Biegefähigkeit, Temperatur- und Feuchtigkeitsabhängigkeit dem Holzfurnierrohling entsprechen oder überlegen sind. Das Trägermaterial soll zu Tragschichten aushärtbar sein, die als Haftvermittler für Lack- oder Klebstoffbeschichtungen geeignet sind und schleif- und schwabbelbar sind.

Es ist auch möglich, Trägermaterial einzusetzen, das bei Normaltemperatur fest ist und zum Auftragen unter Hitzeeinwirkung geschmolzen wird und dann durch Abkühlen ausgehärtet wird. Dafür eignen sich Materialien, wie sie als sogenannte Schmelz- oder Heissschmelzkleber bekannt sind. Solche Materialien kann man zum Beispiel in Form eines Pulvers oder feinen Granulates aufstreuen, durch Erhitzen fliessfähig machen, so dass sich aus der gestreuten Schicht der Film bildet, und dann durch Abkühlen zur Tragschicht aushärten.

Man kann auf den noch nicht ausgehärteten Film aus Trägermaterial feste Materialien, zum Beispiel Cellulosepulver, streuen, das dann in die durch Aushärten entstehende Tragschicht eingebettet ist. Man kann dieses Material auch in die noch nicht ganz ausgehärtete Tragschicht eindrücken oder einwalzen.

Man kann das Aushärten des Trägermaterials beschleunigen, indem man den aufgetragenen Film erwärmt.

Für die folgenden Versuche wurde Eichenfurnier verwendet, weil Eiche besonders gut ausgeprägte Jahresringe aufweist und sehr bruchempfindlich ist.

Um festzustellen, welche Reissfestigkeit für eine störungsfreie Verarbeitung erforderlich ist, wurden Eichenfurnierrohlinge mit der üblichen Dicke von 0,6 mm quer zum Lauf der Jahresringe im Zugversuch geprüft.

Bei einer Einspannlänge von 100 mm, einer Breite des Furnierstreifens von 50 mm und einer Abzugsgeschwindigkeit von 100 mm/min wurde an einem Furnierstück mit engen Jahresringen 13,3 N trocken gemessen. Furnier ähnlicher Struktur nass ergab 19,6 N. (Die angegebenen Werte sind Mittelwerte aus mindestens 10 Einzelmessungen).

Eichenfurnier von 0,6 mm Dicke mit nur wenigen Jahresringen zeigte unter gleichen Messbedingungen nass 46 N trocken 31,3 N.

Aus diesen Messungen kann geschlossen werden, dass eine Querreissfestigkeit von mehr als 13 N/5 cm für die übliche Handhabung und Weiterverarbeitung ausreicht.

Messungen an Eichenfurnier mit 0,4 mm Dicke ergaben:
nass: 8,1 N/5 cm, trocken: 4,3 N/5 cm.

Beispiel 1

Ein feuchter Eichenfurnierrohling von 0,3 mm Stärke wird mit einer Butadien-Acrylnitril-Dispersion (Glastemperatur –30°C, minimale Filmbildtemperatur ca. 5°) mit einem pH-Wert von 6, einem Feststoffgehalt von 45% und einer Viskosität von 380 mPa.s besprüht. Der Nassauftrag beträgt 123 g/m², entsprechend 55 g/m² fest.

Auf den nassen Dispersionsfilm wird ein Pulver aus einem Mischpolyamid mit einer Korngrösse unter 0,1 mm mit einem Erweichungspunkt von ca. 130° gestreut, das Furnierstück auf das Trägerband eines Kanaltrockners gelegt und mit einem Drahtgitter belastet. Die Umluft im Kanaltrockner hat eine Temperatur von 100°C. Nach dem Durchlauf wird das überschüssige Pulver abgesaugt. Falls das nach dem Trocknen verstärkte Furnier zu wellig ist, kann es gegebenenfalls in einem Filzkalander flachgebügelt werden.

Das verstärkte Furnierstück hat eine Reissfestigkeit über 20 N/5 cm Breite quer zu den Jahresringen. Es zeigt keine Verfärbung und Durchschläge. Das Furnierstück lässt sich mit einem heissen Bügeleisen auf eine Spanplatte aufbügeln und fest verbinden, ohne dass ein Leim oder Harz zur Verklebung erforderlich wäre.

Beispiel 2

Ein feuchter Eichenfurnierrohling von 0,3 mm Dicke wird mit einer Vinylacetat-Acrylsäureester-Mischpolymer-Dispersion (Glasübergangsbereich –20 bis +25°, minimale Filmbildtemperatur 0°C) mit einem pH-Wert von 4, einem Festkörpergehalt von 50% und einer Viskosität von 650 mPa.s besprüht. Nassauftrag 260 g/m², entsprechend 130 g/m² fest. Der nasse Dispersionsfilm wird mit Kreide ca. 1 mm hoch bestreut und das Furnierstück wie in Beispiel 1 getrocknet.

Die Querfestigkeit liegt bei ca. 30 N/5 cm. Es sind weder Durchschläge noch Verfärbungen sichtbar.

Beispiel 3

Ein feuchter Eichenfurnierrohling von 0,3 mm Dicke wird mit einer Butadien-Styrol-Dispersion (Glasübergangsbereich –30°C, minimale Filmbildtemperatur 0°C) mit einem pH-Wert von 10,1, einem Festkörpergehalt von 61% und einer Viskosität von 960 mPa.s besprüht. Nassauftrag 485 g/m², entsprechend 295 g/m² fest. Der nasse Dispersionsfilm wird mit Holzmehl ca. 1 mm hoch bestreut und das Furnierstück wie in Beispiel 1 getrocknet.

Die Querfestigkeit liegt bei 44 N/5 cm. Durchschläge sind nicht zu beobachten, aber die beschichtete Furnierseite zeigt dunklere Färbungen als die Gutseite.

Beispiel 4

Ein feuchtes Stück Eichenfurnierrohling von 0,3 mm Dicke wird mit einer Acrylester-Dispersion (Glastemperatur –26°, minimale Filmbildtemperatur 0°) mit einem Feststoffgehalt von 50%, einem pH-Wert von 3,8 und einer Viskosität von 1320 mPa.s besprüht. Der Nassauftrag beträgt 385 g/m², entsprechend 152 g/m² fest. Das Furnierstück wird mit Holzmehl ca. 1 mm hoch beschichtet und getrocknet.

Das trockene Furnierstück weist eine Querreissfestigkeit von 37 N (bei 5 cm Breite) auf und ist nach Farbe und Aussehen einwandfrei.

Eichenfurnier von 0,3 mm Dicke ergab:
nass: 5,7 N/5 cm, trocken: 4,2 N/5 cm.

## Patentansprüche

1. Verfahren zum Herstellen von Holzfurnieren, bei dem ein Rundholz entrindet, zugerichtet, durchfeuchtet und gekocht wird und dann noch warm und durchfeuchtet mit einer Schichtstärke von Bruchteilen eines Millimeters entlang zueinander planparallel sich in Faserlängsrichtung erstreckender Schnittflächen zu sich jeweils über die ganze Schnittfläche erstreckenden Furnierrohlingen abgemessert werden, die anschliessend getrocknet, gesäumt und mit einer Tragschicht, welche verhindert, dass beim Trocknen Risse im Furnier entstehen, versehen werden und entsprechend ihrer ursprünglichen gegenseitigen Lage abgestapelt werden, dadurch gekennzeichnet, dass auf die noch nicht fertiggetrockneten Furnierrohlinge ein Film aus aushärtbarem, fliess- oder streichfähigem Trägermaterial aufgetragen wird, der zu der am Furnier festhaftenden Tragschicht ausgehärtet wird.

2. Verfahren nach Anspruch 1, dadurch gekennzeichnet, dass der Film nur einseitig auf die Furnierrohlinge aufgetragen wird.

3. Verfahren nach Anspruch 1 und 2, dadurch gekennzeichnet, dass man die Furnierrohlinge unmittelbar nach dem Messern in noch feuchtem Zustand in einer eine Polymerdispersion enthaltenden Flotte einseitig besprüht, mit einem Überschuss von trockenem, vorzugsweise aus Holz oder holzähnlichen Stoffen gewonnenem, pulverförmigem Material überzieht, unter Belastung trocknet und vom Überschuss des pulverförmigen Materials befreit.

4. Verfahren nach Anspruch 3, dadurch gekennzeichnet, dass man eine Viskosität der Flotte von wenigstens 300 mPa.s vorsieht und diese bei einem Druck von wenigstens 50 bar versprüht.

5. Verfahren nach Anspruch 3, dadurch gekennzeichnet, dass man eine Menge – bezogen auf den Feststoffanteil – von 5 bis 300 g/m² an Polymerdispersion aufbringt.

6. Verfahren nach Anspruch 2, dadurch gekennzeichnet, dass der Film alternierend, entsprechend einer gestürzten Verlegung beim ersten Furnierrohling auf die Oberseite, beim nächsten auf die Unterseite und beim nächsten wieder auf die Oberseite und so fort, aufgetragen wird.

7. Verfahren nach Anspruch 1, dadurch gekennzeichnet, dass der Film beidseitig auf die Furnierrohlinge aufgetragen wird.

8. Verfahren nach Anspruch 7, dadurch gekennzeichnet, dass der Film durch Tränken der Furnierrohlinge in fliessfähigem Trägermaterial aufgetragen wird.

9. Verfahren nach einem der vorhergehenden Ansprüche, gekennzeichnet durch die Verwendung eines aus mindestens zwei Komponenten bestehenden Trägermaterials, das erst durch Zufügen der letzten Komponente zum Aushärten aktiviert wird, und dadurch, dass das Trägermaterial mit Ausnahme der letzten Komponente zunächst aufgetragen wird und dass dann die letzte Komponente aufgesprüht oder aufgedampft wird.

## Revendications

1. Procédé de fabrication de placages en bois, à savoir un procédé dans lequel un rondin de bois est écorcé, débité, imprégné d'eau et cuit, lequel rondin, encore chaud et imprégné d'eau est coupé en tranches minces d'une épaisseur égale à des fractions de millimètres le long de surfaces de coupe planes et parallèles, s'étendant dans la direction longitudinale des fibres, cela de manière à former des pièces brutes de placage s'étendant chaque fois sur toute la surface de coupe, lesquelles pièces brutes de placage, séchées, rognées et pourvues d'une couche de support, empêchant la formation de fissures dans le bois du placage en train de sécher, sont ensuite désempilées d'une manière qui correspond à leur position mutuelle initale, à savoir un procédé caractérisé par le fait qu'il est appliqué sur les pièces non encore parfaitement séchées, un matériau de support fluide ou enductible, thermodurcissable et adhérant fortement à la couche de support du bois de placage.

2. Procédé, conforme à la revendication 1, caractérisé par le fait que le film n'est appliqué que d'un côté sur les pièces brutes de placage en bois.

3. Procédé, conforme aux revendications 1 et 2, caractérisé par le fait qu'immédiatement après tranchage, on asperge d'un côté, dans un bain contenant une dispersion de polymères, des pièces brutes de bois de placage encore à l'état humide, qu'on les recouvre d'un matériau sec pulvérulent, de préférence extrait de bois ou de matières ligneuses, qu'on les sèche sous charge et qu'on les libère de l'excédent de matériau pulvérulent.

4. Procédé, conforme à la revendication 3, caractérisé par le fait qu'il est prévu un liquide d'aspersion d'une viscosité de 300 mPa.s et que ce liquide es aspergé à une pression de 50 bars au moins.

5. Procédé, conforme à la revendication 3, caractérisé par le fait qu'on utilise une dispersion de polymères en une quantité qui, rapportée à la part de matières solides, est comprise entre 5 et 300 g/m².

6. Procédé, conforme à la revendication 2, caractérisé par le fait que le film s'applique alternativement sur la face supérieure de la première pièce brute de bois de placage, sur la face inférieure de la pièce brute de bois de placage suivante puis à nouveau sur la face supérieure de la pièce brute de placage suivante et ainsi de suite, cela en renversant d'une manière correspondante la pièce brute de bois de placage lorsque celle-ci se déplace.

7. Procédé, conforme à la revendication 1, caractérisé par le fait que le film est appliqué des deux côtés sur les pièces brutes de placage en bois de placage.

8. Procédé, conforme à la revendication 7, caractérisé par le fait que le film est appliqué en trempant dans un matériau fluide de support, les pièces brutes de placage.

9. Procédé, conforme à une des revendications précédentes, caractérisé par l'utilisation d'un matériau de support à deux composants au moins, à savoir d'un matériau qui n'est activé que par l'addition du dernier composant, pour «thermodurcir» le matériau de support, à savoir un procédé caractérisé par le fait que le matériau de support est d'abord appliqué sans le dernier composant et qu'ensuite le dernier composant est aspergé ou déposé par évaporation.

**Claims**

1. Process for producing wood veneers, in which a log is decorticated, rough cut, soaked and digested and whilst still warm and soaked with a coating thickness of fractions of a millimetre along plane-parallel surfaces of cut extending in the longitudinal direction of the fibre are cut to give veneer blanks extending over the entire surface of cut, which are then dried, squared and provided with a support coating preventing cracks from forming in the veneer on drying and are then stacked in accordance with their original reciprocal position, characterized in that to the still not completely dried veneer blanks also is applied a film of a hardenable, flowable or brushable support material, which is hardened to the support coating firmly adhering to the veneer.

2. Process according to claim 1, characterized in that the film is only applied to one side of the veneer blanks.

3. Process according to claims 1 and 2, characterized in that, immediately after cutting and whilst still in the moist state, the veneer blanks are sprayed on one side with a liquor containing a polymer dispersion, coated with an excess of a dry, pulverulent material, preferably obtained from wood or wood-like materials, followed by drying under loading and the removal of the excess pulverulent material.

4. Process according to claim 3, characterized in that the viscosity of the liquor is at least 300 mPa.s and the liquor is sprayed at a pressure of at least 50 bar.

5. Process according to claim 3, characterized in that a polymer dispersion quantity of 5 to 300 g/m$^2$, based on the solid proportion is applied.

6. Process according to claim 2, characterized in that, corresponding to turned-over laying, the film is alternately applied to the first veneer blank to the top, to the bottom, again to the top and so on.

7. Process according to claim 1, characterized in that the film is applied to both sides of the veneer blanks.

8. Process according to claim 7, characterized in that the film is applied by impregnating the veneer blanks in the flowable support material.

9. Process according to one of the preceding claims, characterized by the use of a support material consisting of at least two components, which is only activated for hardening after adding the last component and whereby the support material, with the exception of the last component is applied first and then the last component is sprayed or evaporated on.